# EUROPEAN PATENT APPLICATION

(11) **EP 2 357 774 A1**
(43) Date of publication of application: **17.08.2011**
(21) Application number: 11001046.9
(22) Date of filing: 09.02.2011
(51) Int. Cl.: H04L 29/08, H04W 4/02

(54) **Building a location based service reference database based on encountered RFID tags**

(30) Priority: 12.02.2010 US 304210 P; 26.03.2010 US 748194
(71) Applicant: Broadcom Corporation, Irvine, CA 92617 (US)
(72) Inventor: Karaoguz, Jeyhan, 92606 Irvine, CA (US); Buer, Mark, Irvine, CA 92617 (US); Lundgren, David Albert, 94941 Mill Valley, CA (US); Abraham, Charles, 95033 Los Gatos, CA (US); Garrett, David, 92782 Tustin, CA (US); Murray, David, 92692 Mission Viejo, CA (US)
(74) Representative: Jehle, Volker Armin

(57) **Abstract**

A RFID reader (124) of a RFID enabled mobile device (120) receives RFID information from a RFID tag (116) attached to an object (110). In instances where the RFID enabled mobile device is GNSS enabled, a GNSS position of the RFID enabled mobile device is determined to associate, for example, by location stamping, with the received RFID information. The location-stamped RFID information is communicated to a remote location server (140), where location-based RFID information is received from a plurality of users. The RFID enabled mobile device (120) may communicate at least a portion of the received RFID information to the remote location server (140). When GNSS is not enabled, the RFID enabled mobile device (120) estimates its own location utilizing location information, if available, for the object in the received RFID information. Otherwise, the RFID enabled mobile device acquires location-based RFID information from the remote location server (140) so as to determine its own location.

## Description

### CROSS-REFERENCE TO RELATED APPLICATIONS/INCORPORATION BY REFERENCE

This patent application makes reference to, claims priority to and claims the benefit from United States Provisional Patent Application Serial No. 61/304,210 filed on February 12, 2010.

This patent application makes reference to:
United States Application Serial No. 61/304,198 filed on February 12, 2010,
United States Application Serial No. 61/303,931 filed on February 12, 2010,
United States Application Serial No. 61/303,975 filed on February 12, 2010,
United States Application Serial No. 61/305,174 filed on February 18, 2010,
United States Application Serial No. 61/305,758 filed on February 18, 2010,
United States Application Serial No. (Attorney Docket No. 21011 US02) filed on even date herewith,
United States Application Serial No. _________ (Attorney Docket No. 21013US02) filed on even date herewith,
United States Application Serial No. (Attorney Docket No. 21015US02) filed on even date herewith,
United States Application Serial No. _________ (Attorney Docket No. 21016US02) filed on even date herewith, and
United States Application Serial No. _________ (Attorney Docket No. 21026US02) filed on even date herewith.

Each of the above stated applications is hereby incorporated herein by reference in its entirety.

### FIELD OF THE INVENTION

Certain embodiments of the invention relate to communication systems. More specifically, certain embodiments of the invention relate to a method and system for building a location based service reference database based on encountered RFID tags.

### BACKGROUND OF THE INVENTION

Location-based services are emerging as a new type of value-added service provided by mobile communication network. Location-based services are mobile services in which the user location information is used in order to enable various location-based applications such as, for example, enhanced 911 (E-911), location-based 411, location-based messaging and/or location-based friend finding services.

The growing market for location-based services causes a great demand for tracking systems with high accuracy. In addition to Global navigation satellite-based systems (GNSS) such as Global Positioning System (GPS), Global Navigation Satellite System (GLONASS), Galileo, and/or Assisted-GNSS (A-GNSS), there are several Radio frequency identification (RFID) tracking systems providing tracking through RFID technology. RFID technology uses radio waves to transmit information that's stored on a silicon chip over tiny antennas, together called a "tag", to a device that may read it for process on a computer.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for building a location based service reference database based on encountered RFID tags, substantially as shown in and/or described in connection with at least one of the figures, as set forth more completely in the claims.
According to an aspect, a method for communication is provided, the method comprising:
performing by one or more processors and/or circuits in a RFID enabled mobile device, said RFID enabled mobile device comprising a RFID reader:
   receiving, via said RFID reader, RFID information from a RFID tag that is attached to an object;
   determining a location of said RFID enabled mobile device;
   associating said determined location of said RFID enabled mobile device with said received RFID information; and
   communicating said location-associated RFID information to a remote location server.
Advantageously, said determining a location comprises determining a Global navigation satellite-based systems (GNSS) position of said RFID enabled mobile device.
Advantageously, the method further comprises location stamping said received RFID information from said RFID tag utilizing said determined GNSS position.
Advantageously, said remote location server is operable to receive location-based RFID information for said object from a plurality of RFID enabled mobile devices.
Advantageously, said determining of said location comprises determining a position estimate of said RFID enabled mobile device utilizing location information in said RFID information from said RFID tag that is attached to said object.
Advantageously, said associating comprises location stamping said received RFID information from said RFID tag.
According to an aspect, a method for communication comprises:
performing by one or more processors and/or circuits in a RFID enabled mobile device, said RFID enabled mobile device comprising a RFID reader:
   receiving, via said RFID reader, RFID information from a RFID tag that is attached to an object;
   communicating at least a portion of said RFID information to a remote location server;
   receiving location-based information from said remote location server that is based on said communicated at least a portion of said RFID information; and
   determining location information of said object according to said location-based information received from said remote location server.
Advantageously, said received RFID information from said RFID tag comprises a RFID object identifier (ID) of said object.
Advantageously, the method further comprises extracting said RFID object identifier of said object from said received RFID information.
Advantageously, said communicating at least a portion of said RFID information comprises communicating said extracted RFID object identifier.
Advantageously, the method further comprises determining a location of said RFID enabled mobile device based on said determined location information of said object.
According to an aspect, a system for communication comprises:
one or more processors and/or circuits for use in a RFID enabled mobile device comprising a RFID reader, said one or more processors and/or circuits being operable to:
   receive, via said RFID reader, RFID information from a RFID tag that is attached to an object;
   determine a location of said RFID enabled mobile device;
   associate said determined location of said RFID enabled mobile device with said received RFID information; and
   communicate said location-associated RFID information to a remote location server.
Advantageously, said determining a location comprises determining a Global navigation satellite-based systems (GNSS) position of said RFID enabled mobile device.
Advantageously, said one or more processors and/or circuits are operable to location stamp said received RFID information from said RFID tag utilizing said determined GNSS position.
Advantageously, said remote location server is operable to receive location-based RFID information for said object from a plurality of RFID enabled mobile devices.
Advantageously, said determining of said location comprises determining a position estimate of said RFID enabled mobile device utilizing location information in said RFID information from said RFID tag that is attached to said object.
Advantageously, said associating comprises location stamping said received RFID information from said RFID tag.
According to an aspect, a system for communication comprises:
one or more processors and/or circuits for use in a RFID enabled mobile device comprising a RFID reader, said one or more processors and/or circuits being operable to:
   receive, via said RFID reader, RFID information from a RFID tag that is attached to an object;
   communicate at least a portion of said RFID information to a remote location server;
   receive location-based information from said remote location server that is based on said communicated at least a portion of said RFID information; and
   determine location information of said object according to said location-based information received from said remote location server.
Advantageously, said received RFID information from said RFID tag comprises a RFID object identifier (ID) of said object.
Advantageously, said one or more processors and/or circuits are operable to extract said RFID object identifier of said object from said received RFID information.
Advantageously, said communicating at least a portion of said RFID information comprises communicating said extracted RFID object identifier.
Advantageously, said one or more processors and/or circuits are operable to determine a location of said RFID enabled mobile device based on said determined location information of said object.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary RFID tracking system that is operable to utilize information provided by encountered RFID tags to build a reference database in a location server, in accordance with an embodiment of the invention.

FIG. 2 is a block diagram illustrating an exemplary RFID enabled mobile device that is operable to capture RFID information from encountered RFID tags to build a reference database in a location server, in accordance with an embodiment of the invention.

FIG. 3 is a block diagram illustrating an exemplary location server that is operable to provide location-based RFID information, in accordance with an embodiment of the invention.

FIG. 4 is a flow chart illustrating an exemplary procedure that is utilized to capture RFID information from encountered RFID tags to build a reference database in a location server, in accordance with an embodiment of the invention.

FIG. 5 is a flow chart illustrating an exemplary procedure that is utilized to determine a location of a RFID enabled mobile device based on location information of encountered RFID tags, in accordance with an embodiment of the invention.

### DETAILED DESCRIPTION OF THE INVENTION

Certain embodiments of the invention may be found in a method and system for building a location based service reference database based on encountered RFID tags. In various embodiments of the invention, a RFID enabled mobile device, which is in reading range of a RFID tag attached to an object, may be operable to receive RFID information for the object via a communicatively coupled RFID reader. In instances where the RFID enabled mobile device is GNSS enabled, a GNSS position of the RFID enabled mobile device may be calculated or determined in response to the reception of the RFID information from the RFID tag. The determined GNSS position of the RFID enabled mobile device may be associated with the received RFID information for the object, for example, by location stamping the received RFID information utilizing the determined GNSS position of the RFID enabled mobile device. In instances where location information for the object is available in the received RFID information for the object, the RFID enabled mobile device may utilize the location information for the object to estimate its own location. The location-stamped RFID information may be communicated to a remote location server. The location server may be operable to retrieve or receive location-based RFID information for the object from a plurality of users.

The RFID enabled mobile device 122 may be operable to communicate at least a portion of the received RFID information read from the RFID tag to the object. In return, the RFID enabled mobile device may receive location-based RFID information from the remote location server for the object. Location information of the object may be determined according to the received location-based RFID information from the remote location server. In instances where the RFID enabled mobile device is not GNSS enabled, the RFID enabled mobile device may be configured to extract a RFID object ID of the object from the RFID information read from the RFID tag. The extracted RFID object ID may be communicated to the remote location server for location-based RFID information. The RFID enabled mobile device may be operable to determine or approximate its own location based on the determined location information of the object.

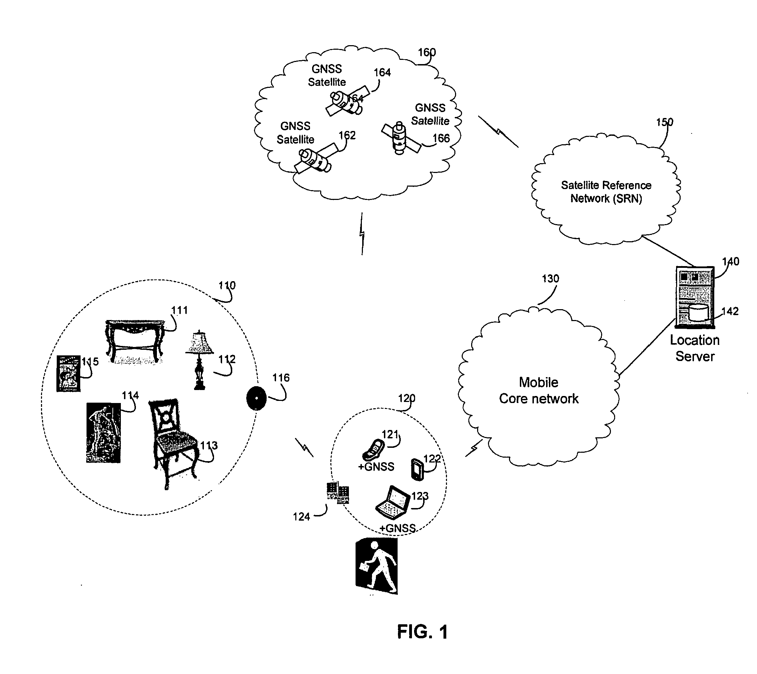

FIG. 1 is a diagram illustrating an exemplary RFID tracking system that is operable to utilize information provided by encountered RFID tags to build a reference database in a location server, in accordance with an embodiment of the invention. Referring to FIG. 1, there is shown a RFID tracking system 100. The RFID tracking system 100 comprises a plurality of objects 110, of which objects 111-115 are illustrated, a plurality of RFID enabled mobile devices 120 such as RFID enabled mobile devices 121-123, a mobile core network 130, a location server 140 communicatively coupled with a reference database 142, a satellite reference network (SRN) 150 and a satellite infrastructure 160.

Objects may comprise outdoor and/or indoor physical objects, spaces and/or any other things where a RFID tag is embedded and/or attached. A physical object may be a product, animal or person. A product may comprise any item such as, for example, a table, a book, a chair, a lamp and/or a painting. Information relevant to an object, which is collected via a RFID tag attached to the object, may be referred to RFID information for the object. RFID information of an object may comprise RFID object identifier (ID) and other information related to the object. For example, in instances where the object is a picture such like the object 114, the corresponding RFID information may comprise RFID object ID and other information such as who painted the picture, what year it was painted, what is the model number of the picture, the history of the picture, and/or the purchase price. RFID information of an object may be stored in, for example, the RDIF tag 116 attached to the object.

The RFID tag 116 may comprise suitable logic, circuitry, interfaces and/or code that are operable to encode and store RFID information for an object where the RFID tag 116 is placed or attached. In instances where the RFID tag 116 has access to location information of the attached object, the RFID tag 116 may store the location information of the attached object as part of RFID information for the attached object. The RFID tag 116 may be operable to communicate information with RFID readers within reading range. For example, the RFID tag 116 may receive an activation signal from the RFID reader 124 attached to a mobile device within reading range of the RFID tag 116. In response, the RFID tag 116 may be operable to transmit or communicate the stored RFID information, which may be received by the RFID reader 124. The transmitted RFID information may be propagated or communicated to the location server 140 via the host of the RFID reader 124.

The RFID reader 124 may comprise suitable logic, circuitry, interfaces and/or code that are operable to emit radio waves, namely, activation signals. The RFID reader 124 may be operable to communicate information with an encountered RFID tag whenever the RFID reader 124 is within reading range of the encountered RFID tag. For example, the RFID reader 124 may be operable to read RFID information from the encountered RFID tag. The RFID reader 124 may be operable to decode the RFID information read from the encountered RFID tag. The decoded RFID information may be processed according to the needs of a particular application. The RFID reader 124 may communicate the processed RFID information to an associated host device such as the RFID enabled mobile device 121 for further processing.

The RFID enabled mobile devices 121-122 may comprise suitable logic, circuitry, interfaces and/or code that are operable to communicate radio frequency signals with the mobile core network 130 utilizing various radio access technologies such as, for example, WLAN, Bluetooth, CDMA, UMTS and/or WiMAX. Each RFID enabled mobile device such as the RFID enabled mobile device 121 may comprise a RFID reader. The RFID enabled mobile device 121 may be operable to capture RFID information from encountered RFID tags through an embedded or attached RFID reader such as the RFID reader 124.

In an exemplary embodiment of the invention, in instances where a particular RFID enabled mobile device is GNSS enabled, for example the RFID enabled mobile device 121, a GNSS position of the RFID enabled mobile device 121 may be determined in response to the captured RFID information. The RFID enabled mobile device 121 may be configured to produce or generate location-based RFID information by location stamping the captured RFID information utilizing the determined GNSS position. The generated location-based RFID information may be communicated to the location server 140 via the mobile core network 130 to build and/or refine the reference database 142.

In another exemplary embodiment of the invention, in instances where a particular RFID enabled mobile device is not GNSS enabled, for example, the RFID enabled mobile device 122, the location of the RFID enabled mobile device 122 may be determined according to location information of one or more encountered objects. For example, in instances where the RFID enabled mobile device 122 moves within reading range of a RFID tag such as the RFID tag 116 that is attached to the object 115, the RFID enabled mobile device 122 may be detected by the RFID tag 116. In this regard, the RFID enabled mobile device 122 may be operable to read RFID information for the object 115 from the RFID tag 116. In instances where the location of the RFID enabled mobile device 122 may be needed for LBS applications, for example, the RFID enabled mobile device 122 may be operable to extract a RFID object ID of the object 115 from the RFID information provided by the RFID tag 116. The extracted RFID object ID may be communicated to the location server 140 for the location information of the object 115. The RFID enabled mobile device 122 may receive location-based RFID information for the object 115 from the location server 140. The received location-based RFID information comprises location information of the object 115 and other related information such as owner's name of the object 115. The received location information of the object 115 may be utilized to determine or estimate the location of the RFID enabled mobile device 122. In instances where the RFID tag 116 comprises location information of the object 115, the RFID enabled mobile device 122 may utilize the stored location information within the RFID tag 116 to support LBS applications whenever needed.

The mobile core network 130 may comprise suitable logic, circuitry, interfaces and/or code that are operable to interface various access networks such as, for example, a CDMA network, a UMTS network and/or a WiMAX network, with external data networks such as packet data networks (PDNs). The mobile core network 130 may be configured to communicate various data services, which are provided by external data networks, to associated users such as, for example, the RFID enabled mobile devices 121-123. The mobile core network 130 may also be operable to communicate location-based RFID information between the RFID enabled mobile devices 121-123 and the location server 140.

The location server 140 may comprise suitable logic, circuitry, interfaces and/or code that are operable to access the satellite reference network (SRN) 150 to collect GNSS satellite data by tracking GNSS constellations through the SRN 150. The location server 140 may be operable to utilize the collected GNSS satellite data to generate GNSS assistance data comprising, for example, ephemeris data, LTO data, reference positions and/or time information. The location server 140 may be operable to collect and/or retrieve location-based RFID information from a plurality of RFID enabled mobile devices. The retrieved location-based RFID information may be indexed by RFID object IDs and/or corresponding locations, and may be stored in the reference database 142. The stored location-based RFID information may be shared among the plurality of users. For example, upon receiving a RFID object ID of a specific object such as the object 114 from the RFID enabled mobile device 122, the reference database 142 may be operable to provide location-based RFID information for the object 114 to the RFID enabled mobile device 122. In addition to details of the object 114, the location information of the object 114 in the received location-based RFID information may be utilized to determine a location of the RFID enabled mobile device 122 when needed.

The SRN 150 may comprise suitable logic, circuitry, interfaces and/or code that are operable to collect and/or distribute data for GNSS satellites on a continuous basis. The SRN 150 may comprise a plurality of GNSS reference tracking stations located around the world to provide assistant GNSS (A-GNSS) coverage all the time in both a home network and/or any visited network.

The GNSS satellites 162 through 166 may comprise suitable logic, circuitry, interfaces and/or code that may be operable to generate and broadcast satellite navigational information. The broadcast satellite navigational information may be collected by the SRN 150 to be utilized by the location server 140 to support LBS services. The GNSS satellites 162 through 166 may comprise GPS, Galileo, and/or GLONASS satellites.

In an exemplary operation, a specific RFID enabled mobile device such as the RFID enabled mobile device 121 and/or the RFID enabled mobile device 122 may be moving into reading range of a RFID tag such as the RFID tag 116 that is attached to an object such as the object 114. A RFID reader such as the RFID reader 124 embedded or attached to the specific RFID enabled mobile device may be operable to read RFID information for the object 114 from the RFID tag 116. The RFID information for the object 114 may comprise a RFID object ID and other detailed information for the object 114. For example, in instances where the object 114 is a book, the RFID information read from the RFID tag 116 may comprise information such as, for example, title, author's name, key word in the book, and/or date to be published. The RFID information may be decoded by the RFID reader 124 to be communicated to the host of the specific RFID enabled mobile device for further processing.

In instances where the specific RFID enabled mobile device is GNSS enabled such as the RFID enabled mobile device 121, a GNSS position of the RFID enabled mobile device 121 may be calculated or determined in response to the reception of the RFID information from the RFID tag 116. The RFID enabled mobile device 121 may be operable to location stamp the corresponding decoded RFID information utilizing the determined GNSS position. The resulting location-based RFID information may be communicated to the location server 140 via the mobile core network 130 so as to build and/or refine the reference database 142.

In instances where the specific RFID enabled mobile device is not GNSS enabled such as the RFID enabled mobile device 122, the location of the RFID enabled mobile device 122 may be needed for LBS applications. In this regard, the RFID enabled mobile device 122 may be configured to provide a RFID object ID of an encountered object such as the object 114 to the location server 140 to acquire location information of the object 114. In response, the reference database 142 may be operable to provide the RFID enabled mobile device 122 with location-based RFID information for the object 114. The location of the RFID enabled mobile device 122 may be determined based on the location-based RFID information provided by the reference database 142 for the object 114. For example, the received location information of the object 114 may be utilized as an estimate of the location of the RFID enabled mobile device 122.

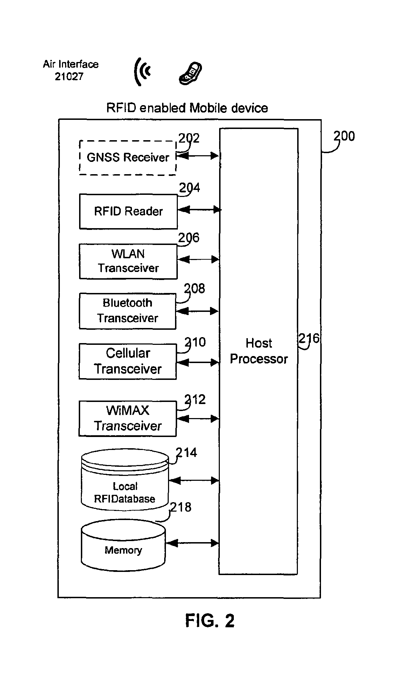

FIG. 2 is a block diagram illustrating an exemplary RFID enabled mobile device that is operable to capture RFID information from encountered RFID tags to build a reference database in a location server, in accordance with an embodiment of the invention. Referring to FIG. 2, there is shown a RFID enabled mobile device 200. The RFID enabled mobile device 200 comprises a GNSS receiver 202, a RFID reader 204, a WLAN transceiver 206, a Bluetooth transceiver 208, a cellular transceiver 210, a WiMAX transceiver 212, a local RFID database 214, a host processor 216 and a memory 218.

The GNSS receiver 202 may comprise suitable logic, circuitry, interfaces and/or code that may be operable to detect and receive GNSS signals from a plurality of visible GNSS satellites such as the GNSS satellite 162-166. The GNSS receiver 202 may be operable to utilize the received GNSS signals to calculate navigation information such as a GNSS position and/or a velocity of the GNSS receiver 202. The calculated GNSS position of the GNSS receiver 202 may be provided to the host processor 216 for various applications such as, for example, to location stamp RFID information read by the RFID reader 204. Depending on device capability, the GNSS receiver 202 is optional for the RFID enabled mobile device 200.

The RFID reader 204 may comprise suitable logic, circuitry, interfaces and/or code that may be operable to emit radio waves, namely, activation signals to RFID tags encountered. In instances where the RFID enabled mobile device 200 is moving within reading range of an object such as the object 111, the RFID reader 204 may be detected and responded by a RFID tag such as the RFID tag 116 attached to the object 111. In this regard, the RFID reader 204 may be operable to receive RFID information for the object 111 from the RFID tag 116. The received RFID information may comprise the RFID object ID of the object 111 and other detailed information. For example, in instances where the object 111 is a table, the received RFID information may comprise make, model, color, sale price, type of material, and/or dimension of the table. The RFID reader 204 may be operable to decode the received RFID information. The decoded RFID information may be communicated to the host processor 216 for further processing according to the needs of a particular application.

The WLAN transceiver 206 may comprise suitable logic, circuitry, interfaces and/or code that may be operable to receive and/or transmit radio frequency signals using wireless LAN technology. The WLAN transceiver 206 may be operable to communicate information such as, for example, location-based RFID information for encountered objects, with the location server 140.

The Bluetooth transceiver 208 may comprise suitable logic, circuitry, interfaces and/or code that may be operable to receive and/or transmit radio frequency signals using Bluetooth technology. The Bluetooth transceiver 204 may be operable to communicate information such as, for example, location-based RFID information for encountered objects, with the location server 140.

The cellular transceiver 210 may comprise suitable logic, circuitry, interfaces and/or code that may be operable to receive and/or transmit radio frequency signals using various cellular communication technologies such as, for example, CDMA, GSM, UMTS and/or LTE. The cellular transceiver 210 may be operable to communicate information such as, for example, location-based RFID information for encountered objects, via the mobile core network 130 with the location server 140.

The WiMAX transceiver 212 may comprise suitable logic, circuitry, interfaces and/or code that may be operable to receive and/or transmit radio frequency signals using WiMAX technology. The WiMAX transceiver 212 may be operable to communicate information such as, for example, location-based RFID information for encountered objects, via the mobile core network 130 with the location server 140.

The local RFID database 214 may comprise suitable logic, circuitry, interfaces and/or code that may be operable to manage and store data comprising location-based RFID information for objects that are encountered. The local RFID database 214 may be configured to index RFID information utilizing relevant RFID object IDs and corresponding locations. The contents of the local RFID database 214 may be communicated to the host processor 216 so that it may be processed according to the needs of a particular application.

The host processor 216 may comprise suitable logic, circuitry, interfaces and/or code that may be operable to manage and/or control operations of associated device component units such as, for example, the GNSS receiver 202, the RFID reader 204, the cellular transceiver 210, and/or the WiMAX transceiver 212, depending on corresponding usages. For example, the host processor 216 may be operable to activate or deactivate one or more associated radios, such as the GNSS receiver 202, on an as needed basis to save power. The host processor 2164 may be operable to coordinate operations among associated device component units for particular applications.

In instances where the RFID enabled mobile device 200 comprises the GNSS receiver 202, in this regard, the host processor 216 may be configured to activate the GNSS receiver 202 whenever RFID information for encountered RFID objects becomes available through the RFID reader 204. The host processor 216 may be operable to utilize GNSS signals that are received via the GNSS receiver 202 to calculate a GNSS position of the RFID enabled mobile device 200. The RFID information from the RFID reader 204 may be location stamped utilizing the calculated GNSS position of the RFID enabled mobile device 200. The host processor 216 may be operable to store the location-based RFID information to the local RFID database 214. The stored location-based RFID information may be provided to the location server 140 to refine or update the reference database 142 on an as needed basis or periodically.

In instances where the RFID enabled mobile device 200 does not comprise the GNSS receiver 202, the host processor 216 may be operable to determine a location of the RFID enabled mobile device 200 according to location information of one or more objects encountered. In this regard, the host processor 216 may be operable to extract RFID object IDs from RFID information read from corresponding RFID tags attached to the objects encountered. The extracted RFID object IDs may be provided to the location server 140 for location information of the corresponding encountered objects. The host processor 216 may be operable to receive location-based RFID information for the encountered RFID from the location server 140. Corresponding locations of the encountered objects may be identified from the received location-based RFID information. The host processor 216 may be operable to utilize the identified locations of the encountered objects to determine the location of the RFID enabled mobile device 200. In instances where RFID information read from RFID tags attached to the objects encountered comprises location information for the encountered objects, the host processor 216 may be operable to utilize the corresponding location information in the RFID information to determine the location of the RFID enabled mobile device 200.

The memory 218 may comprise suitable logic, circuitry, interfaces and/or code that may be operable to store information such as executable instructions and data that may be utilized by the host processor 216 and/or other associated component units such as, for example, the GNSS receiver 202 and/or the RFID reader 204. The memory 218 may comprise RAM, ROM, low latency nonvolatile memory such as flash memory and/or other suitable electronic data storage.

In an exemplary operation, the RFID enabled mobile device 200 may be moving within reading range of a RFID tag such as the RFID tag 116 that is attached to or integrated within a particular object such as the object 114. The RFID reader 204 may be operable to read RFID information for the object 114 from the RFID tag 116. The RFID information from the RFID tag 116 may comprise a RFID object ID of the object 114 and other related information such as the type and/or the owner of the object 114. In instances where the object 114 is a picture, the RFID information from the RFID tag 116 may comprise, for example, painter's name, what year it was painted, the history of the picture, and/or the purchase price. The RFID reader 204 may be operable to decode the RFID information. The decoded RFID information may be communicated to the host processor 216 for further processing according to the needs of a particular application.

In instances where the RFID enabled mobile device 200 is GNSS enabled, the host processor 216 may be operable to calculate or determine a GNSS position of the RFID enabled mobile device 200 utilizing GNSS signals receive through the GNSS receiver 202. The host processor 216 may be operable to location stamp the decoded RFID information utilizing the determined GNSS position. The resulting location-based RFID information may be communicated to the location server 140 to build and/or refine the reference database 142.

In instances where the RFID enabled mobile device 200 is not GNSS enabled, the host processor 216 may be operable to utilize location information of one or more objects encountered to determine a location of the RFID enabled mobile device 200 when needed. In this regard, RFID object IDs of the encountered objects may be extracted from RFID information read from corresponding RFID tags attached to the encountered objects. The extracted RFID object IDs may be provided to the location server 140 for location-based RFID information of the encountered objects. Location information of the encountered objects may be derived from the corresponding location-based RFID information received from the location server 140. The derived location information of the encountered objects may be utilized by the host processor 216 to determine the location of the RFID enabled mobile device 200. For example, the derived location of the encountered objects may be utilized as estimates of the location of the RFID enabled mobile device 200. In instances where RFID information read from RFID tags attached to the encountered objects comprises location information for the encountered objects, the host processor 216 may be operable to estimate the location of the RFID enabled mobile device 200 utilizing the location information in the RFID information.

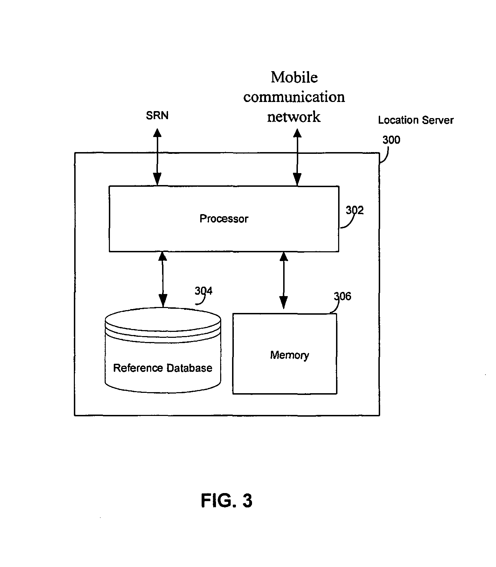

FIG. 3 is a block diagram illustrating an exemplary location server that is operable to provide location-based RFID information, in accordance with an embodiment of the invention. Referring to FIG. 3, there is shown a location server 300. The location server 300 may comprise a processor 302, a reference database 304 and a memory 306.

The processor 302 may comprise suitable logic, circuitry, interfaces and/or code that may be operable to manage and/or control operations of the reference database 304 and the memory 306. The processor 302 may be operable to communicate with the satellite reference network (SRN) 150 so as to collect GNSS satellite data by tracking GNSS constellations through the SRN 150. The processor 302 may be operable to utilize the collected GNSS satellite data to build the reference database 304, which may be coupled internally or externally to the location server 300. The processor 302 may also be operable to receive or collect location-based RFID information for various objects such as, for example, the object 115 from a plurality of users such as the RFID enabled mobile devices 121-123. The collected location-based RFID information may be stored in the reference database 304. The processor 302 may be operable to share the stored location-based RFID information, which is in the reference database 304, among the plurality of users.

The reference database 304 may comprise suitable logic, circuitry, interfaces and/or code that may be operable to store location-based information such as location-based RFID information. Location-based RFID information may be indexed using RFID object identifiers and corresponding locations in the reference database 304. For a given RFID object identifier, the reference database 304 may provide corresponding location-based RFID information, which comprises a location of a corresponding object and other specific information, for example, book title and/or author's name, related to the object. The reference database 304 may be updated or refined on an as needed basis or periodically.

The memory 306 may comprise suitable logic, circuitry, interfaces and/or code that may be operable to store information such as executable instructions and data that may be utilized by the processor 302 and/or other associated component units such as, for example, the reference database 304. The memory 306 may comprise RAM, ROM, low latency nonvolatile memory such as flash memory and/or other suitable electronic data storage.

In an exemplary operation, the processor 302 may be operable to collect GNSS satellite data through the SRN 150 to build the reference database 304. Location-based information such as location-based RFID information may also be collected or retrieved from a plurality of users such as the RFID enabled mobile devices 121-123. The retrieved location-based RFID information may comprise associated RFID object IDs and/or information relevant to corresponding RFID objects. For example, in instances where a RFID object is a book, the corresponding RFID information may comprise book title, author's name, key words in the book, and/or retail price. The processor 302 may store the retrieved location-based RFID information into the reference database 304. The stored location-based RFID information may be indexed using associated RFID object IDs and corresponding locations. The stored location-based RFID information may be shared among the plurality of users on an as needed basis, aperiodically, or periodically.

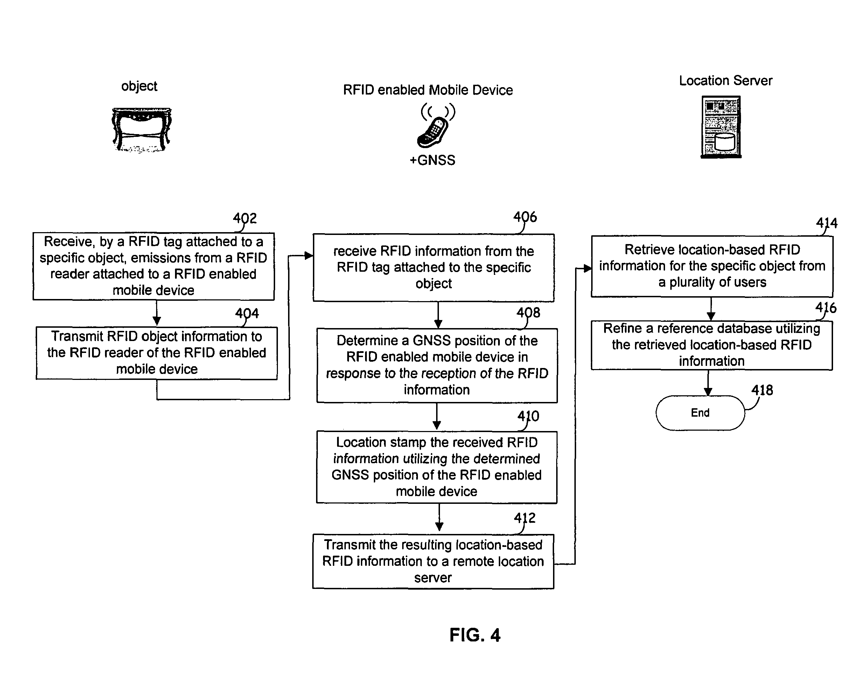

FIG. 4 is a flow chart illustrating an exemplary procedure that is utilized to capture RFID information from encountered RFID tags to build a reference database in a location server, in accordance with an embodiment of the invention. Referring to FIG. 4, the exemplary steps may start with step 402. In step 402, a RFID tag such as the RFID tag 116 attached to the object 111 may be operable to receive emissions or activation signals from a RFID reader such as the RFID reader 204 attached to a RFID enabled mobile device such as the RFID enabled mobile device 200 whenever the RFID enabled mobile device 200 moves within reading range of the RFID tag 116. In step 404, the RFID tag 116 may be operable to communicate RFID information for the object 111 to the RFID reader 204. In step 406, the RFID reader 204 may be operable to decode RFID information received form the RFID tag 116. The decoded RFID information may be communicated to the host processor 216 for further processing.

In step 408, in response, the host processor 216 may be configured to determine a GNSS position of the RFID enabled mobile device 200 utilizing GNSS signals received from the GNSS receiver 202. In step 410, the host processor 216 may location stamp the received RFID information utilizing the determined GNSS position of the RFID enabled mobile device 200. In step 412, the resulting location-based RFID information may be transmitted to a remote location server such as the location server 300 to build and/or refine the reference database 304. In step 414, the location server 300 may be operable to retrieve location-based RFID information for the object 111 from a plurality of users such as, for example, the RFID enabled mobile devices 121-123. The exemplary steps may end with step 418.

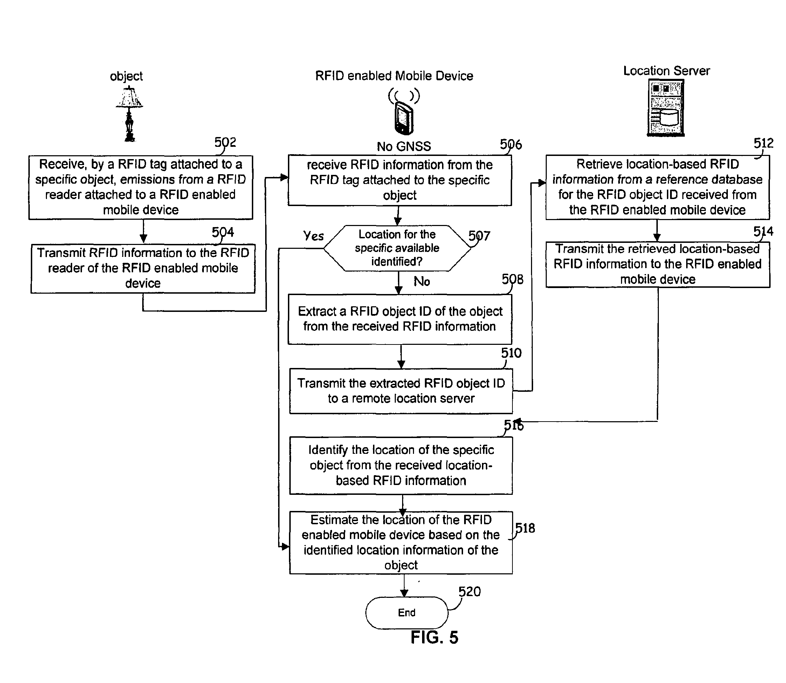

FIG. 5 is a flow chart illustrating an exemplary procedure that is utilized to determine a location of a RFID enabled mobile device based on location information of encountered RFID tags, in accordance with an embodiment of the invention. Referring to FIG. 5, the exemplary steps may start with step 502. In step 502, a RFID tag such as the RFID tag 116 attached to the object 112 may be operable to receive emissions or activation signals from a RFID reader such as the RFID reader 204 attached to the RFID enabled mobile device 200 whenever the RFID enabled mobile device 200 moves into reading range of the RFID tag 116. In step 504, the RFID tag 116 may be operable to transmit RFID information of the object 112 to the RFID reader 204. In step 506, the RFID reader 204 may be operable to decode RFID information received from the RFID tag 116. The decoded RFID information may be communicated with the host processor 216 for further processing. In step 507, it may be determined whether the location for the object 112 may already be identified in the received RFID information. In instances where the location for the object 112 is not identified in the received RFID information, then in step 508. In step 508, the host processor 216 may be operable to extract a RFID object ID of the object 112 from the received RFID information. In step 510, the host processor 216 may be operable to transmit the extracted RFID object ID to a remote location server such as the location server 300.

In step 512, the location server 300 may be operable to communicate with the reference database 304 to retrieve location-based RFID information based on the RFID object ID received from the RFID enabled mobile device 200. In step 514, the location server 300 may be operable to transmit the retrieved location-based RFID information to the RFID enabled mobile device 200. In step 516, the RFID enabled mobile device 200 may be operable to identify the location information of the object 112 from the received location-based RFID information from the location server 300. In step 518, the location of the RFID enabled mobile device 200 may be estimated or determined based on the identified location information of the object 112. The exemplary steps may end with step 520.

In step 507, in instances where the location for the object 112 is identified in the received RFID information, then the exemplary steps may proceed in step 518.

In various exemplary aspects of the method and system for building a location based service reference database based on encountered RFID tags, a RFID enabled mobile device, which is in reading range of a RFID tag such as the RFID tag 116 attached to, for example, the object 114, may be operable to receive RFID information for the object 114 via a communicatively coupled RFID reader such as the RFID reader 124. In instances where the RFID enabled mobile device is GNSS enabled such as the RFID enabled mobile device 121, a GNSS position of the RFID enabled mobile device 121 may be calculated or determined in response to the reception of the RFID information from the RFID tag 116. The determined GNSS position of the RFID enabled mobile device 121 may be associated with the received RFID information for the object 114, for example, by location stamping the received RFID information utilizing the determined GNSS position of the RFID enabled mobile device 121. In instances where location information for the object 114 is available in the received RFID information for the object 114, the RFID enabled mobile device 121 may estimate its own location utilizing the location information for the object 114. The location-stamped RFID information may be communicated to a remote location server such as the location server 300. The location server 300 may be operable to retrieve or receive location-based RFID information for the object 114 from a plurality of users such as the RFID enabled mobile devices 121-123.

A RFID enabled mobile device such as the RFID enabled mobile device 122, which is in reading range of a RFID tag such as the RFID tag 116 attached to, for example, the object 114, may be operable to receive RFID information for the object 114 via a communicatively coupled RFID reader such as the RFID reader 124. The RFID enabled mobile device 122 may be operable to communicate at least a portion of the received RFID information to the location server 300. In return, the RFID enabled mobile device may receive location-based RFID information for the object 114 from the location server 300. Location information of the object 114 may be determined according to the received location-based RFID information from the location server 300. In instances where the RFID enabled mobile device 122 is not GNSS enabled, the RFID enabled mobile device 122 may be configured to extract the RFID object ID from the RFID information read from the RFID tag 116. The extracted RFID object ID may be communicated to the location server 300 for location-based RFID information. The RFID enabled mobile device 122 may be operable to determine or approximate its own location based on the determined location information of the object 114.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for building a location based service reference database based on encountered RFID tags.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
performing by one or more processors and/or circuits in a RFID enabled mobile device, said RFID enabled mobile device comprising a RFID reader:
receiving, via said RFID reader, RFID information from a RFID tag that is attached to an object;
determining a location of said RFID enabled mobile device;
associating said determined location of said RFID enabled mobile device with said received RFID information; and
communicating said location-associated RFID information to a remote location server.

2. The method according to claim 1, wherein said determining a location comprises determining a Global navigation satellite-based systems (GNSS) position of said RFID enabled mobile device.

3. The method according to claim 2, comprising location stamping said received RFID information from said RFID tag utilizing said determined GNSS position.

4. The method according to claim 3, comprising, wherein said remote location server is operable to receive location-based RFID information for said object from a plurality of RFID enabled mobile devices.

5. The method according to claim 1, wherein said determining of said location comprises determining a position estimate of said RFID enabled mobile device utilizing location information in said RFID information from said RFID tag that is attached to said object.

6. The method according to claim 1, wherein said associating comprises location stamping said received RFID information from said RFID tag.

7. A method for communication, the method comprising:
performing by one or more processors and/or circuits in a RFID enabled mobile device, said RFID enabled mobile device comprising a RFID reader:
receiving, via said RFID reader, RFID information from a RFID tag that is attached to an object;
communicating at least a portion of said RFID information to a remote location server;
receiving location-based information from said remote location server that is based on said communicated at least a portion of said RFID information; and
determining location information of said object according to said location-based information received from said remote location server.

8. The method according to claim 7, wherein said received RFID information from said RFID tag comprises a RFID object identifier (ID) of said object.

9. The method according to claim 8, comprising extracting said RFID object identifier of said object from said received RFID information.

10. The method according to claim 9, wherein said communicating at least a portion of said RFID information comprises communicating said extracted RFID object identifier.

11. The method according to claim 7, comprising determining a location of said RFID enabled mobile device based on said determined location information of said object.

12. A system for communication, the system comprising:
one or more processors and/or circuits for use in a RFID enabled mobile device comprising a RFID reader, said one or more processors and/or circuits being operable to:
receive, via said RFID reader, RFID information from a RFID tag that is attached to an object;
determine a location of said RFID enabled mobile device;
associate said determined location of said RFID enabled mobile device with said received RFID information; and
communicate said location-associated RFID information to a remote location server.

13. The system according to claim 12, wherein said determining a location comprises determining a Global navigation satellite-based systems (GNSS) position of said RFID enabled mobile device.

14. A system for communication, the system comprising:
one or more processors and/or circuits for use in a RFID enabled mobile device comprising a RFID reader, said one or more processors and/or circuits being operable to:
receive, via said RFID reader, RFID information from a RFID tag that is attached to an object;
communicate at least a portion of said RFID information to a remote location server;
receive location-based information from said remote location server that is based on said communicated at least a portion of said RFID information; and
determine location information of said object according to said location-based information received from said remote location server.

15. The system according to claim 14, wherein said received RFID information from said RFID tag comprises a RFID object identifier (ID) of said object.
